# EUROPEAN PATENT APPLICATION

(11) **EP 4 575 450 A1**
(43) Date of publication of application: **25.06.2025**
(21) Application number: 23929048.9
(22) Date of filing: 24.03.2023
(51) Int. Cl.: G01M 11/02

(54) **MULTI-FOCUS OPTICAL DETECTION DEVICE**

(71) Applicant: Pegavision Corporation, Taoyuan City 333 (TW)
(72) Inventor: CHEN, Shih Wei, Taoyuan City Taiwan 333 (TW); CHU, Chih-Cheng, Taoyuan City Taiwan 333 (TW); LIN, Wu-chun, Taoyuan City Taiwan 333 (TW)
(74) Representative: Durán-Corretjer, S.L.P.
(86) International application number: PCT/CN2023/083627
(87) International publication number: WO 2024/197444

(57) **Abstract**

A multi-focus optical detection device (100), comprising a detection area (1), a detection light source (2) and a beam splitter (3) which are arranged corresponding to the detection area (2), two cameras (4, 5) arranged corresponding to the beam splitter (3), and an image processor (6) electrically coupled to the two cameras (4, 5). The detection light source (2) can emit light (L) passing through the contact lens (203). The beam splitter (3) is used for splitting the light to make the light travel synchronously along two light splitting paths (24, 25). The two cameras (4, 5) are respectively located on the two light splitting paths (24, 25) and are used for focusing on the central part and the outer edge part of the contact lens (203), so as to respectively obtain two images (41, 51). The image processor (6) can be used for receiving the two images (41, 51) so as to combine the two images (41, 51) to form a detection image (61) covering the entire contact lens (203). Therefore, the multi-focus optical detection device (100) can use a high-resolution camera having a small depth of field, so as to effectively improve the detection capability.

## Description

### FIELD OF THE INVENTION

The present invention relates to a multi-focus optical detection device, and more particularly to a multi-focus optical detection device for detecting a contact lens.

### BACKGROUND OF THE INVENTION

For the detection of contact lenses worn on human eyes, a conventional optical detection device is provided with a variety of detection mechanisms to make the detection of contact lenses more accurate. For example, the various detection mechanisms include a phase contrast imaging or a schlieren photography. However, the detection mechanisms provided by the conventional optical detection device are helpless for improving the detection capabilities of the conventional optical detection device.

Therefore, believing that the above-mentioned defects can be improved, the inventor dedicated much research, applied scientific principles, and finally proposed the present invention that is reasonably designed and that effectively improves on the above-mentioned defects.

### SUMMARY OF THE INVENTION

The purpose of the present invention is to provide a multi-focus optical detection device for effectively improving on the issues associated with conventional optical detection devices.

An embodiment of the present invention provides a multi-focus optical detection device, characterized in that the multi-focus optical detection device comprises: a detection region for allowing a device under test (DUT) to be disposed thereon, wherein the DUT includes a transparent carrier, a liquid arranged in the transparent carrier, and a contact lens that is immersed in the liquid; a detection light source configured to selectively emit a bright-field light or a dark-field light toward the detection region for defining a predetermined light path that passes through the DUT; a light splitter arranged corresponding to the detection region and located at the predetermined light path, wherein the light splitter is configured to split light emitted from the detection light source into two parts synchronously traveling along a first light splitting path and a second light splitting path, respectively; a first camera arranged at the first light splitting path, wherein the first camera is configured to focus on a first predetermined portion of the contact lens so as to obtain a first image corresponding to the contact lens, wherein, when the first camera receives the bright-field light, the first image is defined as a first bright-field image, and wherein, when the first camera receives the dark-field light, the first image is defined as a first dark-field image; a second camera arranged at the second light splitting path, wherein the second camera is configured to focus on a second predetermined portion of the contact lens spaced apart from the first predetermined portion so as to obtain a second image corresponding to the contact lens, wherein, when the second camera receives the bright-field light, the second image is defined as a second bright-field image, and wherein, when the second camera receives the dark-field light, the second image is defined as a second dark-field image; and an image processor electrically coupled to the first camera and the second camera, wherein the image processor is configured to receive and combine the first bright-field image and the second bright-field image to form a bright-field detection image that corresponds to an entirety of the contact lens and that shows a plurality of first defects of the contact lens classified into M kinds, M being a positive integer, and wherein the image processor is configured to receive and combine the first dark-field image and the second dark-field image to form a dark-field detection image that corresponds to the entirety of the contact lens and that shows a plurality of second defects of the contact lens classified into N kinds, N being a positive integer; wherein at least part of the second defects is classified into N1 kinds included in the N kinds and are different from the first defects classified into the M kinds, and wherein N1 is a positive integer being less than or equal to N.

Preferably, the first predetermined portion is a central portion of the contact lens, and the first camera has a depth of field that covers an optical zone of the contact lens.

Preferably, the second predetermined portion is a peripheral portion of the contact lens, and the second camera has a depth of field that covers a non-optical zone of the contact lens surrounding the optical zone.

Preferably, the depth of field of the first camera covers a part of the non-optical zone and is partially overlapped with the depth of field of the second camera.

Preferably, a depth of field of the first camera is partially overlapped with a depth of field of the second camera.

Preferably, a part of the second defects is classified into N2 kinds included in the N kinds and is identical to the first defects classified into the M kinds, and wherein N2 is a positive integer being less than or equal to N, and N is greater than N1.

Preferably, the second defects classified into the N1 kinds include a black foreign matter and a white foreign matter attached on the contact lens, and the second defects classified into the N2 kinds include a dander attached on the contact lens.

Preferably, M is greater than or equal to 2N, and N is a sum of N1 and N2.

An embodiment of the present invention also provides a multi-focus optical detection device, characterized in that the multi-focus optical detection device comprises: a detection region for allowing a device under test (DUT) to be disposed thereon, wherein the DUT includes a transparent carrier, a liquid arranged in the transparent carrier, and a contact lens that is immersed in the liquid; a detection light source configured to emit a light toward the detection region for defining a predetermined light path that passes through the DUT; a light splitter arranged corresponding to the detection region and located at the predetermined light path, wherein the light splitter is configured to split the light beam emitted from the detection light source into two parts synchronously traveling along a first light splitting path and a second light splitting path, respectively; a first camera arranged at the first light splitting path, wherein the first camera is configured to focus on an optical zone of the contact lens so as to obtain a first image corresponding to the contact lens; a second camera arranged at the second light splitting path, wherein the second camera is configured to focus on a non-optical zone of the contact lens so as to obtain a second image corresponding to the contact lens; and an image processor electrically coupled to the first camera and the second camera, wherein the image processor is configured to receive and combine the first image and the second image to form a detection image.

Preferably, the contact lens includes an optical zone and a non-optical zone that surrounds the optical zone, wherein the first camera has a depth of field that covers the optical zone and a part of the non-optical zone, and the second camera has a depth of field that covers the non-optical zone and that is partially overlapped with the depth of field of the first camera, and wherein the image processor is configured to capture a focusing portion of the first image corresponding to the optical zone, and the image processor is configured to combine the focusing portion of the first image with a focusing portion of the second image corresponding to the non-optical zone so as to form the detection image that corresponds to the entirety of the contact lens.

In summary, the detection image (e.g., the bright-field detection image and the dark-field detection image) adopted by the multi-focus optical detection device in the present embodiment of the present invention is obtained by combining images that are provided by using the first camera and the second camera to respectively focus on different portions of the contact lens, such that an image of the entirety of the contact lens is not limited to be obtained from a single camera. Accordingly, each of the first camera and the second camera in the multi-focus optical detection device can be a high-resolution camera having a small depth of field (DOF), thereby effectively improving the detection capability (e.g., accuracy) of the multi-focus optical detection device.

Specifically, the multi-focus optical detection device in the present embodiment of the present invention can obtain the bright-field detection image and the dark-field detection image, which can be used in complementarity to show defects, by flexibly using the detection light source (e.g., the bright-field light and the dark-field light), thereby further improving the detection efficiency of the multi-focus optical detection device.

In order to further understand the features and technical content of the present invention, please refer to the following detailed description and drawings of the present invention. However, these descriptions and drawings are only used to illustrate the present invention and do not limit the scope of the present invention in any way.

### BRIEF DESCRIPTION OF THE DRAWINGS

FIG. 1 is a schematic view of a multi-focus optical detection device according to an embodiment of the present invention.
FIG. 2 is a schematic enlarged view of part II of FIG. 1.
FIG. 3 is a schematic view showing a first image generated from the multi-focus optical detection device in operation according to the embodiment of the present invention.
FIG. 4 is a schematic view showing a second image generated from the multi-focus optical detection device in operation according to the embodiment of the present invention.
FIG. 5 is a schematic view showing a detection image generated from the multi-focus optical detection device in operation according to the embodiment of the present invention.

### DETAILED DESCRIPTION OF THE EXEMPLARY EMBODIMENTS

The following is a specific example to illustrate the implementation of the "multifocal optical detection device" disclosed in the present invention. Those skilled in the art can understand the advantages and effects of the present invention from the content disclosed in this specification. The present invention can be implemented or applied through other different specific embodiments, and various details in this specification can also be modified and changed based on different viewpoints and applications without departing from the concept of the present invention. In addition, the drawings of the present invention are only simple schematic illustrations and are not depictions based on actual dimensions, as is stated in advance. The following embodiments will further describe the relevant technical content of the present invention in detail, but the disclosed content is not intended to limit the scope of the present invention.

It should be understood that although terms such as "first", "second" and "third" may be used herein to describe various components or signals, these components or signals should not be limited by these terms. These terms are primarily used to distinguish one component from another component or one signal from another signal. In addition, the term "or" used in this article shall include any one or combination of more of the associated listed items depending on the actual situation.

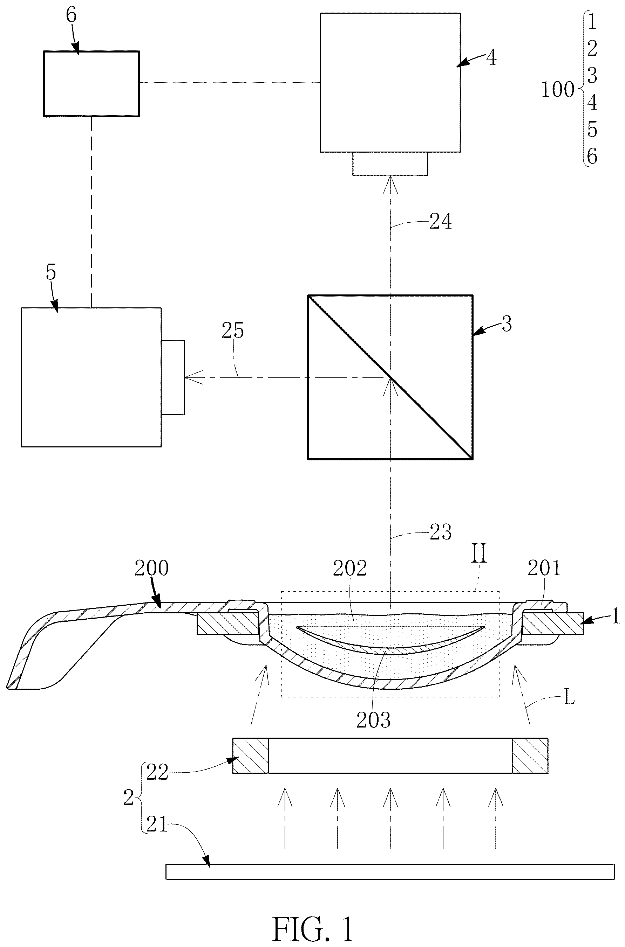

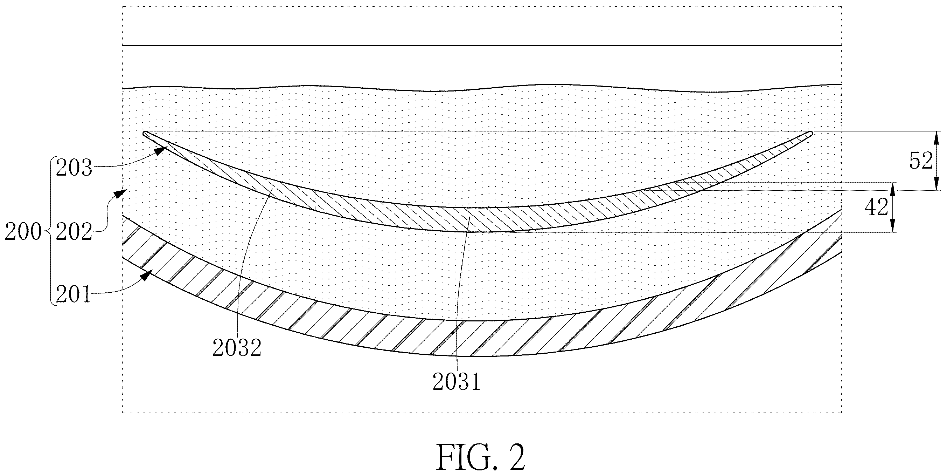

Referring to FIG. 1 to FIG. 5, an embodiment of the present invention is provided. As shown in FIG. 1 and FIG. 2, the present embodiment provides a multi-focus optical detection device 100, which is limited to detecting defects possibly existing in a contact lens 200. In other words, any optical detection device not provided for detecting contact lens is different from the multi-focus optical detection device 100 of the present embodiment.

The multi-focus optical detection device 100 includes a detection region 1, a detection light source 2 arranged corresponding to the detection region 1, a light splitter 3 arranged corresponding to the detection region 1, a first camera 4 arranged corresponding to the light splitter 3, a second camera 5 arranged corresponding to the light splitter 3, and an image processor 6. The detection region 1 can be a carrying platform and is configured for allowing a device under test (DUT) 200 to be disposed thereon. It should be noted that, the DUT 200 includes a transparent carrier 201 (e.g., a polypropylene cup), a liquid 202 arranged in the transparent carrier 201, and a contact lens 203 that is immersed in the liquid 202.

The detection light source 2 and the light splitter 3 are respectively arranged at two opposite sides of the detection region 1 (e.g., as shown in FIG. 1, the detection light source 2 is arranged under the detection region 1, and the light splitter 3 is arranged above the detection region 1), an outer surface of the contact lens 203 preferably faces toward the detection light source 2, and an inner surface of the contact lens 203 faces toward the light splitter 3, but the present invention is not limited thereto.

Specifically, the detection light source 2 is configured to emit a light beam L toward the detection region 1 for defining a predetermined light path 23 that passes through the DUT 200 (e.g., the contact lens 203). Moreover, the detection light source 2 in the present embodiment includes a backlight panel 21 and an annular light emitter 22 that is located between the backlight panel 21 and the detection region 1. The DUT 200 is located at a central axis of the annular light emitter 22, such that the backlight panel 21 and the annular light emitter 22 are in cooperation for emitting the light beam L, but the present invention is not limited thereto. For example, in other embodiments of the present invention not shown in the drawings, the detection light source 2 can have light-emitting components different from the above components according to design requirements.

The light splitter 3 is located at the predetermined light path 23 and is configured to split the light beam L emitted from the detection light source 2 into two parts synchronously traveling along a first light splitting path 24 and a second light splitting path 25, respectively. In the present embodiment, one part of the light beam L travels along the first light splitting path 24 by passing through the light splitter 3, and another part of the light beam L travels along the second light splitting path 25 by being reflected from the light splitter 3.

The first camera 4 is arranged at the first light splitting path 24 and is configured to receive the part of the light beam L traveling along the first light splitting path 24. The second camera 5 is arranged at the second light splitting path 25 and is configured to receive the another part of the light beam L traveling along the second light splitting path 25. The image processor 6 is electrically coupled to the first camera 4 and the second camera 5 for receiving images obtained from the first camera 4 and the second camera 5.

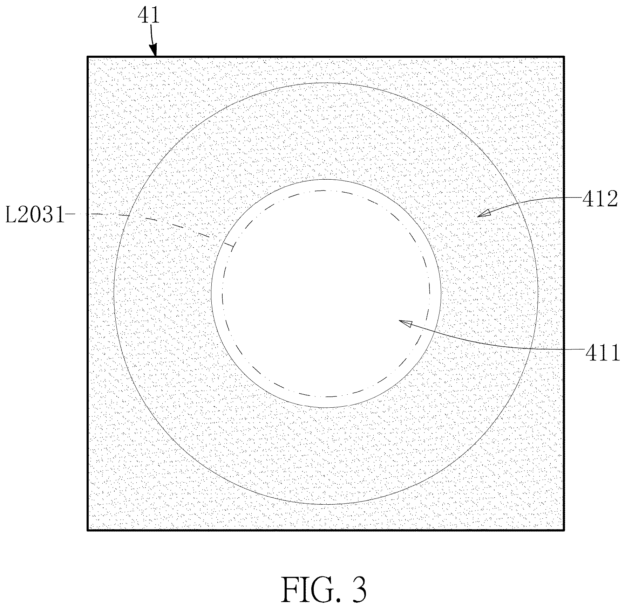

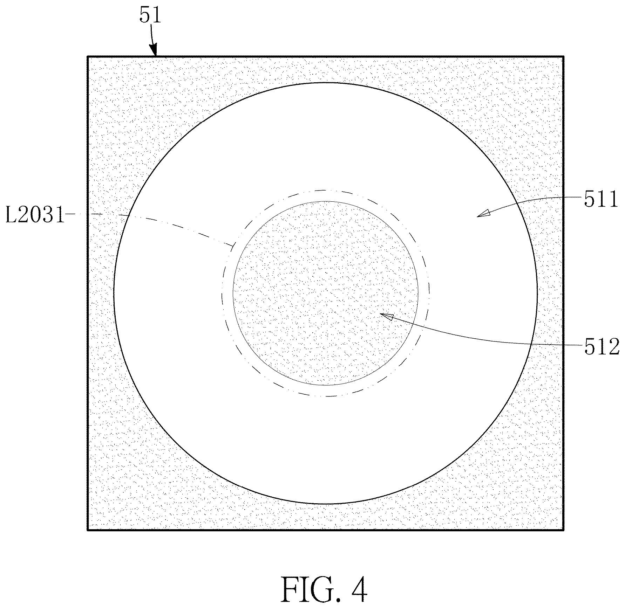

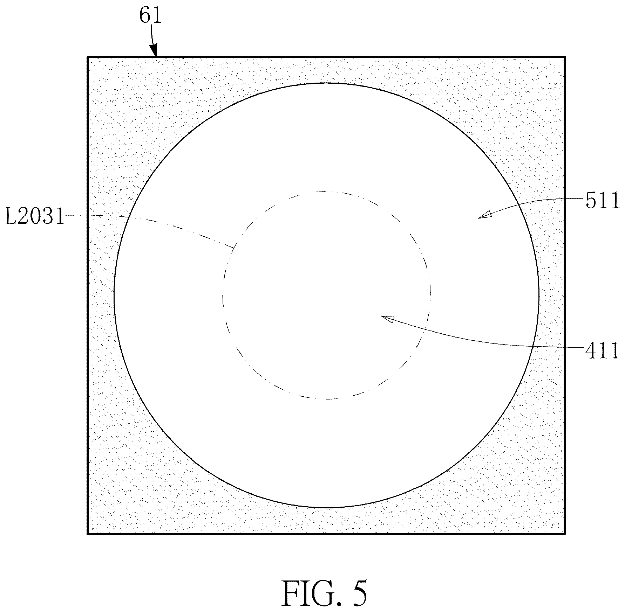

Specifically, as shown in FIG. 1 to FIG. 5, the first camera 4 is configured to focus on a first predetermined portion of the contact lens 203 so as to obtain a first image 41 (shown in FIG. 3) corresponding to the contact lens 203. The second camera 5 is configured to focus on a second predetermined portion of the contact lens 203 spaced apart from the first predetermined portion so as to obtain a second image 51 (shown in FIG. 4) corresponding to the contact lens 203. Moreover, the image processor 6 is configured to receive and combine the first image 41 and the second image 51 to form a detection image 61 (shown in FIG. 5) corresponding to an entirety of the contact lens 203. It should be noted that, the image shown in FIG. 3 to FIG. 5 has a separation line L2031 shown as dash-dotted lines for enabling an optical zone 2031 and a non-optical zone 2032 to be distinguished from each other.

In summary, the detection image 61 adopted by the multi-focus optical detection device 100 in the present embodiment is obtained by combining the images that are provided by using the first camera 4 and the second camera 5 to respectively focus on different portions of the contact lens 203, such that an image of the entirety of the contact lens 203 is not limited to be obtained from a single camera. Accordingly, each of the first camera 4 and the second camera 5 in the multi-focus optical detection device 100 can be a high-resolution camera having a small depth of field (DOF), thereby effectively improving the detection capability (e.g., accuracy) of the multi-focus optical detection device 100.

In the present embodiment, a depth of field (DOF) 42 of the first camera 4 is partially overlapped with a DOF 52 of the second camera 5, thereby ensuring that the detection image 61 show exactly the entirety of the contact lens 203.

The contact lens 203 includes an optical zone 2031 and a non-optical zone 2032 that surrounds the optical zone 2031. The contact lens 203 can have a correction function for a refractive error through the optical zone 2031. For example, the refractive error can include a hyperopia, a myopia, an astigmatism, and a presbyopia, but the present invention is not limited thereto. In other words, the contact lens 203 can be a makeup lens without the correction function.

Moreover, the first predetermined portion is arranged on the optical zone 2031 (e.g., a central portion of the contact lens 203), and the DOF 42 of the first camera 4 covers the optical zone 2031 and a part of the non-optical zone 2032. The second predetermined portion is arranged on the non-optical zone 2032 (e.g., a peripheral portion of the contact lens 203), and the DOF 52 of the second camera 5 covers the non-optical zone 2032, such that the DOF 52 of the second camera 5 is partially overlapped with the DOF 42 of the first camera 4, but the present invention is not limited thereto. For example, in other embodiments of the present invention not shown in the drawings, the DOF 42 of the first camera 4 can only cover the optical zone 2031, and the DOF 52 of the second camera 5 can only cover the non-optical zone 2032.

Accordingly, the image processor 6 in the present embodiment is configured to capture a focusing portion 411 of the first image 41 (e.g., a portion surrounded by the separation line L2031 shown in FIG. 3) corresponding to the optical zone 2301, and the image processor 6 is configured to combine the focusing portion 411 of the first image 41 with a focusing portion 511 of the second image 51 (e.g., a portion arranged outside of the separation line L2031 shown in FIG. 3) corresponding to the non-optical zone 2032, so as to form the detection image 61. In other words, an abandoned portion 412 of the first image 41 corresponds to the non-optical zone 2032, and an abandoned portion 512 of the second image 51 corresponds to the optical zone 2031.

In addition, the multi-focus optical detection device 100 in the present embodiment can further improve its detection efficiency by flexibly using the detection light source 2. Specifically, the light beam L in the present embodiment can be a bright-field light or a dark-field light. In other words, the detection light source 2 is configured to selectively emit the bright-field light or the dark-field light toward the detection region 1 for defining the predetermined light path 23. The detection light source 2 in the present embodiment includes the backlight panel 21 and the annular light emitter 22, which are in cooperation for emitting the bright-field light or the dark-field light, but the present invention is not limited thereto.

When the first camera 4 and the second camera 5 receive the bright-field light emitted from the detection light source 2, the first image 41 is defined as a first bright-field image, and the second image 51 is defined as a second bright-field image. Moreover, the image processor 6 is configured to receive and combine the first bright-field image and the second bright-field image to form a bright-field detection image that shows a plurality of first defects of the contact lens 203 classified into M kinds, M being a positive integer. In other words, when the detection light source 2 emits the bright-field light, the detection image 61 is defined as the bright-field detection image.

In addition, when the first camera 4 and the second camera 5 receive the dark-field light emitted from the detection light source 2, the first image 41 is defined as a first dark-field image, and the second image 51 is defined as a second dark-field image. Moreover, the image processor 6 is configured to receive and combine the first dark-field image and the second dark-field image to form a dark-field detection image that shows a plurality of second defects of the contact lens 203 classified into N kinds, N being a positive integer. In other words, when the detection light source 2 emits the dark-field light, the detection image 61 is defined as the dark-field detection image.

It should be noted that, at least part of the second defects is classified into N1 kinds included in the N kinds and are different from the first defects classified into the M kinds, and N1 is a positive integer being less than or equal to N. Accordingly, the multi-focus optical detection device 100 in the present embodiment can obtain the bright-field detection image and the dark-field detection image, which can be used in complementarity to show defects, by flexibly using the detection light source 2 (e.g., the bright-field light and the dark-field light), thereby further improving the detection efficiency of the multi-focus optical detection device 100, but the present invention is not limited thereto. For example, in other embodiments of the present invention not shown in the drawings, the detection light source 2 of the multi-focus optical detection device 100 can be used to emit only one of the bright-field light and the dark-field light.

In the present embodiment, a part of the second defects is classified into N2 kinds included in the N kinds and is identical to the first defects classified into the M kinds. Moreover, N2 is a positive integer being less than or equal to N, N is greater than N1, and N is a sum of N1 and N2. For example, M is 12, and the first defects classified into the M kinds and occurring on the contact lens 203 include an insufficient water defect, a reversed side defect, a deformation defect, a no water defect, an air bubble defect, a missing piece defect, an overlapping piece defect, an edge crack defect, a fragment defect, a dirt defect, a rust spot defect, and a dander defect.

It should be noted that, the kinds of the first defects shown in the bright-field image are not changed according to kinds of the contact lens 203, but the kinds of the second defects shown in the dark-field image would be changed according to the kinds of the contact lens 203.

For example, in the contact lens 203 (e.g., a normal contact lens having aqua blue color) formed without any texture or pattern, the second defects classified into the N1 kinds include a black foreign matter and a white foreign matter attached on the contact lens 203, and the second defects classified into the N2 kinds include a dander attached on the contact lens 203. In other words, N1 is two, N2 is one, N is three, and M is greater than 2N.

Furthermore, in the contact lens 203 (e.g., a makeup contact lens) formed with texture or pattern, the second defects classified into the N1 kinds include a black foreign matter and a white foreign matter attached on the contact lens 203, and the second defects classified into the N2 kinds include a dander and a rust spot attached on the contact lens 203 and include an edge crack defect and a fragment formed on the contact lens 203. In other words, N1 is two, N2 is four, N is six, and M is equal to 2N.

In addition, the M kinds of the first defects and the N kinds of the second defects in the present embodiment are described in the above description, but the present invention is not limited thereto. In other words, in other embodiments of the present invention not shown in the drawings, the first detects and the second defects of the contact lens 203 can be adjusted or changed according to practical detection requirements.

### [Beneficial Effects of the Embodiments of the present invention]

In conclusion, the detection image (e.g., the bright-field detection image and the dark-field detection image) adopted by the multi-focus optical detection device in the present embodiment of the present invention is obtained by combining the images that are provided by using the first camera and the second camera to respectively focus on different portions of the contact lens, such that an image of the entirety of the contact lens is not limited to be obtained from a single camera. Accordingly, each of the first camera and the second camera in the multi-focus optical detection device can be a high-resolution camera having a small depth of field (DOF), thereby effectively improving the detection capability (e.g., accuracy) of the multi-focus optical detection device.

Specifically, the multi-focus optical detection device in the present embodiment of the present invention can obtain the bright-field detection image and the dark-field detection image, which can be used in complementarity to show defects, by flexibly using the detection light source (e.g., the bright-field light and the dark-field light), thereby further improving the detection efficiency of the multi-focus optical detection device.

The contents disclosed above are only preferred and feasible embodiments of the present invention, and do not limit the scope of the present invention. Therefore, all equivalent technical changes made using the contents of the description and drawings of the present invention are included in the scope of the present invention.

## Claims

1. A multi-focus optical detection device, **characterized in that** the multi-focus optical detection device comprises:
a detection region for allowing a device under test (DUT) to be disposed thereon, wherein the DUT includes a transparent carrier, a liquid arranged in the transparent carrier, and a contact lens that is immersed in the liquid;
a detection light source configured to selectively emit a bright-field light or a dark-field light toward the detection region for defining a predetermined light path that passes through the DUT;
a light splitter arranged corresponding to the detection region and located at the predetermined light path, wherein the light splitter is configured to split light emitted from the detection light source into two parts synchronously traveling along a first light splitting path and a second light splitting path, respectively;
a first camera arranged at the first light splitting path, wherein the first camera is configured to focus on a first predetermined portion of the contact lens so as to obtain a first image corresponding to the contact lens, wherein, when the first camera receives the bright-field light, the first image is defined as a first bright-field image, and wherein, when the first camera receives the dark-field light, the first image is defined as a first dark-field image;
a second camera arranged at the second light splitting path, wherein the second camera is configured to focus on a second predetermined portion of the contact lens spaced apart from the first predetermined portion so as to obtain a second image corresponding to the contact lens, wherein, when the second camera receives the bright-field light, the second image is defined as a second bright-field image, and wherein, when the second camera receives the dark-field light, the second image is defined as a second dark-field image; and
an image processor electrically coupled to the first camera and the second camera, wherein the image processor is configured to receive and combine the first bright-field image and the second bright-field image to form a bright-field detection image that corresponds to an entirety of the contact lens and that shows a plurality of first defects of the contact lens classified into M kinds, M being a positive integer, and wherein the image processor is configured to receive and combine the first dark-field image and the second dark-field image to form a dark-field detection image that corresponds to the entirety of the contact lens and that shows a plurality of second defects of the contact lens classified into N kinds, N being a positive integer;
wherein at least part of the second defects is classified into N1 kinds included in the N kinds and are different from the first defects classified into the M kinds, and wherein N1 is a positive integer being less than or equal to N.

2. The multi-focus optical detection device according to claim 1, **characterized in that** the first predetermined portion is a central portion of the contact lens, and the first camera has a depth of field that covers an optical zone of the contact lens.

3. The multi-focus optical detection device according to claim 2, **characterized in that** the second predetermined portion is a peripheral portion of the contact lens, and the second camera has a depth of field that covers a non-optical zone of the contact lens surrounding the optical zone.

4. The multi-focus optical detection device according to claim 3, **characterized in that** the depth of field of the first camera covers a part of the non-optical zone and is partially overlapped with the depth of field of the second camera.

5. The multi-focus optical detection device according to claim 1, **characterized in that** a depth of field of the first camera is partially overlapped with a depth of field of the second camera.

6. The multi-focus optical detection device according to claim 1, **characterized in that** a part of the second defects is classified into N2 kinds included in the N kinds and is identical to the first defects classified into the M kinds, and wherein N2 is a positive integer being less than or equal to N, and N is greater than N1.

7. The multi-focus optical detection device according to claim 6, **characterized in that** the second defects classified into the N1 kinds include a black foreign matter and a white foreign matter attached on the contact lens, and the second defects classified into the N2 kinds include a dander attached on the contact lens.

8. The multi-focus optical detection device according to claim 6, **characterized in that** M is greater than or equal to 2N, and N is a sum of N1 and N2.

9. A multi-focus optical detection device, **characterized in that** the multi-focus optical detection device comprises:
a detection region for allowing a device under test (DUT) to be disposed thereon, wherein the DUT includes a transparent carrier, a liquid arranged in the transparent carrier, and a contact lens that is immersed in the liquid;
a detection light source configured to emit a light beam toward the detection region for defining a predetermined light path that passes through the DUT;
a light splitter arranged corresponding to the detection region and located at the predetermined light path, wherein the light splitter is configured to split the light beam emitted from the detection light source into two parts synchronously traveling along a first light splitting path and a second light splitting path, respectively;
a first camera arranged at the first light splitting path, wherein the first camera is configured to focus on an optical zone of the contact lens so as to obtain a first image corresponding to the contact lens;
a second camera arranged at the second light splitting path, wherein the second camera is configured to focus on a non-optical zone of the contact lens so as to obtain a second image corresponding to the contact lens; and
an image processor electrically coupled to the first camera and the second camera, wherein the image processor is configured to receive and combine the first image and the second image to form a detection image.

10. The multi-focus optical detection device according to claim 9, **characterized in that** the contact lens includes an optical zone and a non-optical zone that surrounds the optical zone, wherein the first camera has a depth of field that covers the optical zone and a part of the non-optical zone, and the second camera has a depth of field that covers the non-optical zone and that is partially overlapped with the depth of field of the first camera, and wherein the image processor is configured to capture a focusing portion of the first image corresponding to the optical zone, and the image processor is configured to combine the focusing portion of the first image with a focusing portion of the second image corresponding to the non-optical zone so as to form the detection image that corresponds to an entirety of the contact lens.
